## Europäisches Patentamt

(19) **European Patent Office**

**Office européen des brevets**

(11) Numéro de publication: **0 065 444**
**B1**

## FASCICULE DE BREVET EUROPEEN

(45) Date de publication du fascicule du brevet:
**12.09.84**

(51) Int. Cl.³: **H 04 N 1/40**

(21) Numéro de dépôt: **82400794.2**

(22) Date de dépôt: **30.04.82**

(54) **Procédé pour la reconstitution par filtrage, d'un signal analogique à partir d'un signal pseudoanalogique obtenu par double conversion analogique/numérique, numérique/analogique dudit signal analogique avec traitement éventuel du signal numérique.**

(30) Priorité: **08.05.81 FR 8109239**

(43) Date de publication de la demande:
**24.11.82 Bulletin 82/47**

(45) Mention de la délivrance du brevet:
**12.09.84 Bulletin 84/37**

(84) Etats contractants désignés:
**AT BE CH DE GB IT LI LU NL SE**

(56) Documents cités:
**GB - A - 2 023 371**
**GB - A - 2 070 385**

**NATIONAL TELECOMMUNCATIONS CONFERENCE, Atlanta, Georgia, 26-28 novembre 1973, pages 12C, 1-6, IEEE, New York, USA K.P. WACKS: "Filter design for real-time facsimile transmission"**
**NACHRICHTENTECHNISCHE ZEITSCHRIFT, vol. 28, no. 2, 1975, pages 69-73, Berlin, DE. J. KLIE: "A video telephone system with an increased resolution for facsimile transmission"**

(73) Titulaire: **Organisme Autonome doté de la personnalité Civile AGENCE FRANCE-PRESSE, 13 Place de la Bourse, F-75002 Paris (FR)**

(72) Inventeur: **Guerillot, Stéphane, 17, Avenue du Docteur Arnold Netter, F-75012 Paris (FR)**
Inventeur: **Regnault, Alain, I, rue Lyautey, F-75016 Paris (FR)**
Inventeur: **Dureigne, Bernard, Résidence la Croix du Sud 4 Allée Maryse Hilsz, F-94150 Chevilly-Larue (FR)**

(74) Mandataire: **Jolly, Jean-Pierre et al, Cabinet BROT 83, rue d'Amsterdam, F-75008 Paris (FR)**

## Description

La présente invention concerne un procédé et un dispositif pour la reconstitution, par filtrage, d'un signal analogique, à partir d'un signal pseudoanalogique obtenu par double conversion analogique/numérique, numérique/analogique dudit signal analogique avec traitement éventuel dudit signal numérique.

Elle a plus particulièrement pour objet le filtrage d'un signal pseudoanalogique, dans lequel les variations analogiques d'amplitude en fonction du temps sont représentées par des variations de niveaux incrémentales.

Ce problème de filtrage est très important en ce qui concerne la restitution de documents graphiques ou iconographiques préalablement encodés par méthodes numériques.

En transmission numérique de photos ou documents nécessitant la présence de demi-teintes, chaque nuance de gris en noir et blanc (ou de luminance en couleur) est représentée par un niveau. Si l'on désire obtenir un document restitué fidèlement, on sera obligé d'augmenter le nombre de points (pixels) à quantifier, et de prévoir un grand nombre de niveaux du noir au blanc; deux cent cinquante-six par exemple. Dans ce cas, une cellule de filtrage passe-bas à faible constante de temps suffira à filtrer le signal pour le rendre identique à l'original.

Cette solution, même si l'on utilise divers codes de compression, présente l'inconvénient d'exiger un grand nombre d'informations binaires. Dans le cas d'un format A4/2 par exemple, en prenant 4 points au mm, on aurait 504 000 pixels et 4 032 000 bits binaires.

Cette grande quantité de bits binaires oblige soit à employer des lignes de transmission haute vitesse pour transmettre rapidement un document, soit à employer des codes de compression complexes pour ramener le nombre de bits binaires à transmettre à un nombre moins élevé. Cette technique exige un matériel complexe et coûteux, tant à l'encodage qu'au décodage.

D'autres solutions consistent à ajouter numériquement un signal de bruit électronique au signal, permettant ainsi de linéariser le signal décodé, en rendant les transitions moins abruptes. Cette solution est également complexe et coûteuse et ne donne pas réellement satisfaction pour une restitution de qualité.

L'invention a pour but de supprimer tous ces inconvénients. Elle propose à cet effet un procédé permettant de quantifier le signal analogique par un nombre de niveaux raisonnables (16 à 32 par exemple) et de filtrer à la réception le signal pseudoanalogique obtenu après décodage numérique/analogique, au moyen d'un filtre actif à constante de temps variable ne dénaturant pas le signal et permettant notamment de filtrer fortement les faibles variations de niveaux et de filtrer faiblement les fortes variations de niveaux.

Selon une caractéristique de l'invention, on filtre le signal pseudoanalogique avec une constante de temps inversement proportionnelle à la dérivée de ce signal. Dans ce cas, le procédé selon l'invention comprend en outre la mémorisation de l'impédance du filtre entre deux dérivées successives.

L'invention concerne également un dispositif pour la mise en œuvre du procédé précédemment décrit et dans lequel le signal pseudoanalogique est appliqué à l'entrée d'un filtre par exemple de type RC dont l'impédance, par exemple la valeur R, est commandée par la dérivée absolue de la valeur positive du signal pseudoanalogique au moyen d'un circuit comprenant en série un dérivateur recevant le signal pseudoanalogique et une mémoire effectuant la commande de la valeur de l'impédance dudit filtre.

L'invention sera décrite ci-dessous de façon plus précise à propos d'un exemple de réalisation de l'invention donné à titre d'exemple non limitatif, avec référence aux dessins annexés dans lesquels:

la fig. 1 représente un signal analogique avant traitement numérique;

la fig. 2 représente le signal pseudoanalogique obtenu par numérisation et décodage du signal représenté fig. 1;

la fig. 3 représente le signal qui serait obtenu par filtrage, à l'aide d'un filtre passe-bas du signal représenté fig. 2;

la fig. 4 représente le signal obtenu par le procédé et le dispositif selon l'invention;

la fig. 5 est un schéma-bloc théorique permettant d'illustrer le principe du procédé et du dispositif selon l'invention;

la fig. 6 représente le signal obtenu en effectuant la dérivée du signal représenté fig. 2;

la fig. 7 représente le signal obtenu par mémorisation du signal de dérivées représenté fig. 6;

la fig. 8 est un schéma de principe d'un dispositif selon l'invention.

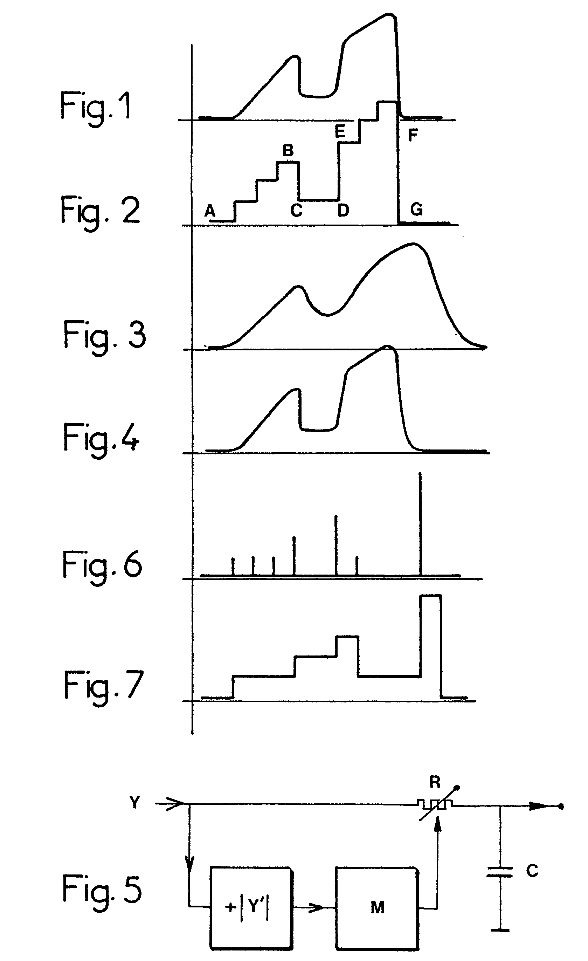

Avec référence aux fig. 1 et 2, on constate que les variations d'amplitude du signal analogique en fonction du temps sont représentées, après numérisation (fig. 2), par des variations de niveaux incrémentales, chaque niveau ayant une valeur fixe.

Si l'on filtre le signal numérisé pseudoanalogique (fig. 2) avec un filtre passe-bas, on obtient le signal représenté fig. 3 qui, de toute évidence, n'est pas l'image du signal de la fig. 1 que l'on devrait retrouver.

En vue de supprimer cet inconvénient, c'est-à-dire d'obtenir un signal (fig. 4) qui est l'image de celui de la fig. 1, l'invention propose d'utiliser un filtre du type de celui représenté par le schéma-bloc de la fig. 5.

Selon ce filtre, le signal pseudoanalogique Y est appliqué à l'entrée d'un filtre RC dont la valeur R est commandée par la dérivée absolue de la valeur positive Y' du signal Y (dérivateur + |Y'|).

Entre deux dérivées successives, cette valeur est mémorisée dans la mémoire M. Dans le cas du signal AB de la fig. 2, les trois dérivées correspondant aux trois marches seront d'égale amplitude puisque les niveaux de transition sont identiques. Les dérivées correspondant aux niveaux BC, DE et FG seront de plus grande valeur, ainsi que les niveaux respectifs de transition (fig. 6). Ce signal qui est ensuite mémorisé en M (fig. 5) est décrit en fig. 7. Pour les faibles variations de niveaux, la résistance R (fig. 5) est grande, puisque commandée par une tension faible (fig. 7), le produit RC est donc grand et le filtrage est efficace; pour les fortes variations de niveaux, la résistance R (fig. 5) est faible, puisque commandée par une forte tension (fig. 7), le produit RC est donc plus faible et le filtrage est moins efficace. En fait, la résistance R (fig. 5) agit comme un générateur commandé de courant constant absolu.

Il apparaît donc que le dispositif précédemment décrit permet de filtrer fortement les faibles variations de niveaux (partie AB de la fig. 2) et de filtrer faiblement les fortes variations de niveaux (parties BC, DE et FG de la fig. 2).

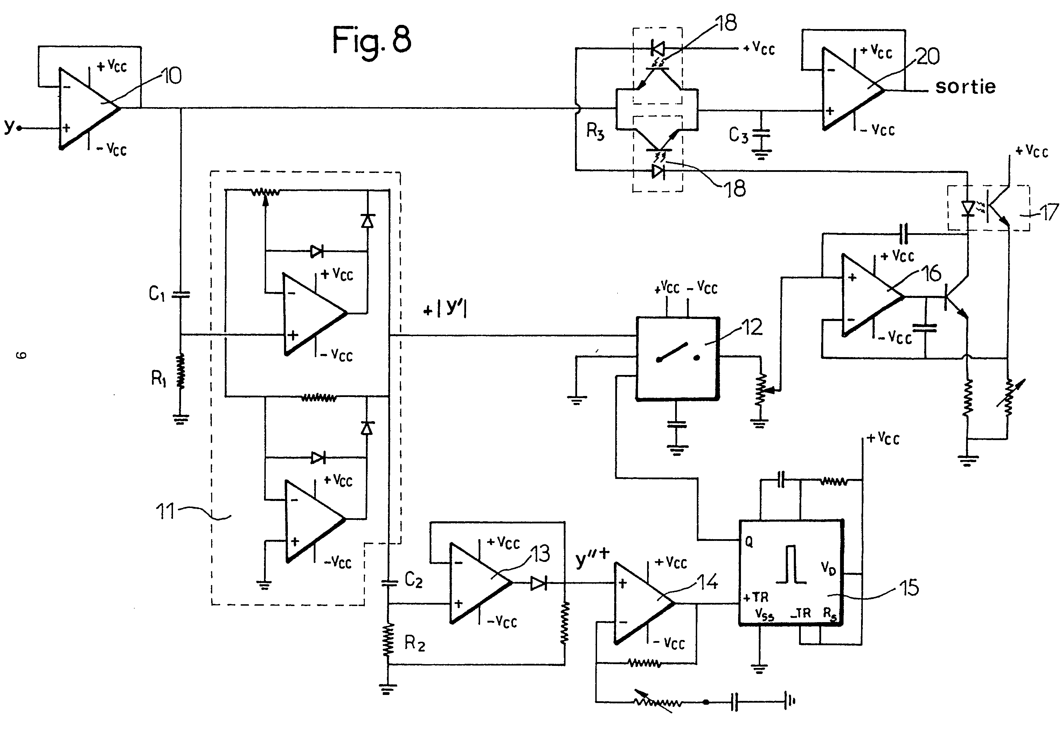

Dans le mode de réalisation représenté fig. 8, le signal pseudoanalogique Y est appliqué à un amplificateur de courant 10, puis dérivé au moyen d'un dérivateur consistant en une cellule $C_1R_1$, redressé par le redresseur de valeur absolue (bloc 11) et appliqué à l'entrée d'un échantillonneur bloqueur 12 qui est commandé par la dérivée seconde du signal émanant d'un deuxième dérivateur (cellule $R_2C_2$), redressée par le circuit redresseur 13, amplifiée à saturation par un amplificateur 14, calibrée en temps par un circuit monostable 15. La sortie de cet échantillonneur bloqueur 12 attaque un amplificateur 16 à contre-réaction optoélectronique 17 commandant la résistance $R_3$ du réseau $R_3C_3$ formée de deux coupleurs optoélectroniques 18 câblés tête-bêche pour charger ou décharger le condensateur $C_3$. Le signal est ensuite appliqué à l'amplificateur de courant 20, à la sortie duquel le signal issu de l'amplificateur 10 et de la cellule $R_3C_3$ est disponible, et filtré.

Cette réalisation démontre la faisabilité de ce principe, étant entendu que toute autre forme de traitement du signal de commande de filtrage, par calculateur numérique par exemple, ne s'écarte pas de la présente invention.

De même, la nature du circuit tenant lieu de résistance variable ou de commande bipolaire de courant peut être différente sans que l'on s'écarte pour autant de la présente invention.

De même, on pourra faire varier la valeur de C dans le produit RC, ce qui équivaudrait au même résultat.

De même, pour perfectionner le résultat, on pourrait filtrer plusieurs fois de suite le signal en prenant ses dérivées après chaque filtrage.

On notera en outre que le principe de filtre peut s'appliquer à d'autres applications que celle décrite ci-dessus, sans que l'on s'écarte pour autant de la présente invention.

## Revendications

1. Procédé pour la reconstitution, par filtrage, d'un signal analogique, à partir d'un signal pseudoanalogique obtenu par double conversion analogique/numérique, numérique/analogique dudit signal analogique avec traitement éventuel du signal numérique et dans lequel les variations analogiques d'amplitude en fonction du temps sont représentées par des variations de niveaux incrémentales, caractérisé en ce qu'il consiste à filtrer ledit signal pseudoanalogique, au moyen d'un filtre actif, à constante de temps variable ne dénaturant pas le signal et qui filtre fortement les faibles variations de niveaux et qui filtre faiblement les fortes variations de niveaux.

2. Procédé selon la revendication 1, caractérisé en ce que l'on filtre le signal pseudoanalogique avec une contante de temps variable commandée par la dérivée de ce signal.

3. Procédé selon la revendication 1, caractérisé en ce que la constante de temps du susdit filtre actif est commandée à l'inverse de la dérivée du signal à filtrer.

4. Application du procédé selon l'une des revendications précédentes aux transmissions graphiques et iconographiques de documents par voie numérique ou au stockage de ces documents sur divers supports par voies numériques.

5. Dispositif pour la mise en œuvre du procédé selon l'une des revendications précédentes, caractérisé en ce qu'il comprend un filtre actif dans lequel le signal pseudoanalogique est appliqué, l'impédance de ce filtre étant commandée par la dérivée absolue de la valeur positive du signal pseudoanalogique obtenu au moyen d'un circuit comprenant en série un dérivateur RC recevant le signal pseudoanalogique et une mémoire M effectuant la commande de la valeur de l'impédance dudit filtre.

6. Dispositif selon la revendication 5, caractérisé en ce que le signal pseudoanalogique et éventuellement amplifié est transmis, d'une part, à un réseau $R_3C_3$ à impédance variable fournissant le signal reconstitué et, d'autre part, à un circuit comprenant:

— un premier dérivateur $R_1C_1$,

— un redresseur de valeur absolue 11 recevant le signal du dérivateur $R_1C_1$,

— un échantillonneur bloqueur 12 relié à la sortie du redresseur 11 et dont la sortie est reliée au cricuit de commande de l'impédance du réseau $R_3C_3$,

— un deuxième dérivateur $R_2C_2$ relié à la sortie du redresseur de valeur absolue 11,

— un ensemble formé par un redresseur 14 et un circuit monostable 15, qui reçoit le signal fourni par le deuxième redresseur et dont le signal calibré à la sortie du monostable 15 commande l'échantillonneur bloqueur 12.

7. Dispositif selon la revendication 6, caractérisé en ce que le réseau $R_3C_3$ comprend une capacité $C_3$ et une résistance formée de deux coupleurs optoélectroniques 18 câblés tête-bêche.

8. Dispositif selon l'une des revendications précédentes, caractérisé en ce que le signal fourni par l'échantillonneur 12 est transmis aux coupleurs optoélectroniques 18 par l'intermédiaire d'un amplificateur 16 à contre-réaction optoélectronique.

## Patentansprüche

1. Verfahren zur Wiederherstellung durch Filtern eines analogen Signals, ausgehend von einem pseudoanalogen Signal erhalten durch eine doppelte Analog/Digital-, Digital/Analog-Umsetzung des genannten analogen Signals unter eventueller Behandlung des digitalen Signals, bei welchem die zeitabhängigen analogen Veränderungen der Amplitude durch sprunghafte Pegeländerungen dargestellt werden, dadurch gekennzeichnet, dass das pseudoanaloge Signal mittels eines das Signal nicht verändernden aktiven Filters veränderlicher Zeitkonstante gefiltert wird, welches die schwachen Pegeländerungen stark filtert und die starken Pegeländerungen schwach filtert.

2. Verfahren nach Anspruch 1, dadurch gekennzeichnet, dass das pseudoanaloge Signal mit einer veränderlichen Zeitkonstante filtriert wird, welche durch die Ableitung dieses Signals gesteuert wird.

3. Verfahren nach Anspruch 1, dadurch gekennzeichnet, dass die Zeitkonstante des aktiven Filters umgekehrt zur Ableitung des zu filtrierenden Signals gesteuert wird.

4. Anwendung des Verfahrens gemäss einem der vorgehenden Ansprüche auf graphische oder bildgerechte Übertragungen von Dokumenten auf numerischem Wege oder auf die Speicherung dieser Dokumente auf verschiedenen Trägern auf numerischem Wege.

5. Vorrichtung zum Durchführen des Verfahrens gemäss einem der vorhergehenden Ansprüche, dadurch gekennzeichnet, dass sie ein aktives Filter aufweist, welchem das pseudoanaloge Signal zugeführt wird und dessen Impedanz durch den Absolutwert der Ableitung des Positivwertes des pseudoanalogen Signals gesteuert wird, wobei der Absolutwert der Ableitung mittels eines Kreises erhalten wird, welcher eine Serienschaltung aus einem das pseudoanaloge Signal empfangenden RC-Differenzierglied und einem den Wert der Impedanz dieses Filters steuernden Speicher M aufweist.

6. Vorrichtung nach Anspruch 5, dadurch gekennzeichnet, dass das gegebenenfalls verstärkte pseudoanaloge Signal einerseits auf ein das wiederhergestellte Signal lieferndes $R_3C_3$-Netz variabler Impedanz und anderseits auf einen Kreis übertragen wird, welcher
— ein $R_1$-$C_1$-Differenzierglied,
— einen das Signal des $R_1$-$C_1$-Differenzergliedes empfangenden Absolutwertgleichrichter (11),
— einen an den Ausgang des Gleichrichters (11) angeschlossenen und mit dem Ausgang an den Steuerkreis für die Impedanz des $R_3$-$C_3$-Netzes angeschlossenen Durchlassschalter (12),
— ein an den Ausgang des Absolutwertgleichrichters (11) angeschlossenes zweites $R_2$-$C_2$-Differenzierglied, und
— eine von einem Gleichrichter (14) und einem monostabilen Kreis (15) gebildete Einheit aufweist, welche das vom zweiten Gleichrichter gelieferte Signal empfängt und deren am Ausgang des monostabilen Kreises (15) kalibriertes Signal den Durchlassschalter (12) steuert.

7. Vorrichtung nach Anspruch 6, dadurch gekennzeichnet, dass das $R_3$-$C_3$-Netz eine Kapazität $C_3$ und einen Widerstand aufweist, welcher von zwei antiparallel geschalteten optoelektronischen Kopplern (18) gebildet ist.

8. Vorrichtung nach irgendeinem der vorgehenden Ansprüche, dadurch gekennzeichnet, dass das vom Durchlassschalter (12) gelieferte Signal an die optoelektronischen Koppler (18) über einen Verstärker (16) mit optoelektronischer Gegenkopplung übertragen wird.

## Claims

1. A process for the reconstruction by filtering of an analog signal from a pseudoanalog signal obtained by double analog/digital, digital/analog conversion of said analog signal with a possible processing of the digital signal and in which the analog amplitude variations as a function of time are represented by incremental level variations, characterized in that it consists in filtering said pseudoanalog signal by means of an active filter with a variable time constant not denaturing the signal and which filters the low level variations intensely and which filters the high level variations weakly.

2. The process according to Claim 1, characterized in that the pseudoanalog signal is filtered with a variable time constant controlled by the derivative of this signal.

3. The process according to Claim 1, characterized in that the time constant of said active filter is controlled inversely to the derivative of the signal to be filtered.

4. Application of the process according to one of the preceding claims to graphic and iconographic transmissions of documents by digital means or to the storage of these documents on different support media by digital means.

5. A device for implementing the process according to one of the preceding claims, characterized in that it comprises an active filter in which the pseudoanalog signal is applied, the impedance of this filter being controlled by the absolute derivative of the positive value of the pseudoanalog signal obtained by means of a circuit comprising an RC differentiator receiving the pseudoanalog signal and a memory M for controlling the value of the impedance of said filter.

6. The device according to Claim 5, characterized in that the pseudoanalog signal, possibly amplified, is transmitted on the one hand to a variable impedance network $R_3C_3$ supplying the reconstructed signal and, on the other hand, to a circuit comprising:
— a first differentiator $R_1C_1$,
— an absolute value rectifier (11) receiving the signal from the differentiator $R_1C_1$,
— a disabling sampler (12) connected to the output of rectifier (11) and whose output is connected to the circuit for controlling the impedance of the network $R_3C_3$,

— a second differentiator $R_2C_2$ connected to the output of the absolute value rectifier (11),

— an assembly formed by a rectifier (14) and a monostable circuit (15), which receives the signal supplied by the second rectifier and whose calibrated signal at the output of the monostable (15) controls the disabling sampler (12).

7. The device according to Claim 6, characterized in that the network $R_3C_3$ comprises a capacity $C_3$ and a resistance formed from two optoelectronic couplers (18) connected head to tail.

8. The device according to one of the preceding claims, characterized in that the signal supplied by sampler (12) is transmitted to the optoelectronic couplers (18) through an amplifier (16) with optoelectronic feedback.

0 065 444

Fig.1

Fig. 2

Fig. 3

Fig.4

Fig.6

Fig.7

Fig.5

7

Fig. 8